# EUROPÄISCHE PATENTSCHRIFT

(11) **EP 3 150 492 B1**
(45) Veröffentlichungstag und Bekanntmachung des Hinweises auf die Patenterteilung: **17.04.2019**
(21) Anmeldenummer: 14000028.2
(22) Anmeldetag: 06.01.2014
(51) Int. Cl.: B64D 1/08, A01K 67/033, A01M 3/00, B64D 1/02

(54) **Kugelabwurfvorrichtung**
Ball throwing device
Dispositif d'éjection de balles

(30) Priorität: 09.01.2013 CH 1052013
(43) Veröffentlichungstag der Anmeldung: 05.04.2017
(73) Patentinhaber: fenaco Genossenschaft, 3012 Bern (CH)
(72) Erfinder: Berger, Nicole, 3400 Burgdorf (CH); Berger, Walter, 3400 Burgdorf (CH)
(74) Vertreter: Herrmann, Johanna

(56) Entgegenhaltungen:
- WO-A1-90/14760
- WO-A1-2011/152702
- CN-A- 102 687 711
- DE-A1- 4 022 910
- FR-A1- 2 583 256

## Beschreibung

Die vorliegende Erfindung betrifft eine Kugelabwurfvorrichtung, die in einem Flug- oder Fahrzeug angeordnet werden kann, und die insbesondere zur Dosierung und zum Abwurf von Schädlingsbekämpfungsmitteln aus der Luft verwendet werden kann. Im Rahmen der Schädlingsbekämpfung ist es allgemein bekannt, Nützlinge einzusetzen. So werden für die biologische Schädlingsbekämpfung, insbesondere zur Maiszünsler-Bekämpfung, Schlupfwespen (Trichogramma) eingesetzt. Die Trichogramma-Schlupfwespen suchen die Maispflanzen aktiv nach Maiszünsler-Eiern ab. Sie legen ihre Eier in die Maiszünsler-Eier, entwickeln sich in den Maiszünsler-Eiern, um diese dann zu zerstören. Aus den zerstörten Maiszünsler-Eiern schlüpfen wieder Trichogrammen. Sie bilden Feldgenerationen und suchen kontinuierlich während der Eiablageperiode der Maiszünsler deren Schädlingseier.

Die Eiparasiten der Schlupfwespen sind natürliche Feinde vieler Schädlinge im Acker-, Gemüse- und Obstanbau. Allerdings reichen die natürlich vorkommenden Populationen für eine erfolgreiche Schädlingsbekämpfung nicht aus. Deshalb werden Schlupfwespen in Massen vermehrt und ausgebracht.

Zur Ausbringung von Schlupfwespen ist es bisher beispielsweise bekannt, dass sich die Eier dieser Schlupfwespen in biologisch abbaubaren Kapseln befinden, die per Hand oder maschinell auf dem Boden unter den Pflanzen ausgebracht werden. Zur Schädlingsbekämpfung auf grossflächigen Feldern, wie auf Maisfeldem, sind eine Vielzahl solcher Kapseln auszubringen. Dies erfolgt zur Vermeidung eines hohen und kostenintensiven Personalaufwands maschinell.

Aus der DE 10 2010 009 342 A1 ist eine Vermehrungs-, Brut- und Aufzuchtkugel für Nützlinge bekannt geworden, die aus einem biologisch abbaubaren Material, insbesondere auf Zellstoffbasis, besteht und eine vermehrungsfähige Population von Nützlingen enthält. Diese Kugeln bilden Ausbringeinheiten, die vorzugsweise zu mehreren jeweils mittels Verbindungsschnüren verbunden sind und auf diese Weise ein perlschnurartiges Ausbringsystem für die Nützlinge bilden. Je nach Wunsch können diese Verbindungsschnüre getrennt werden, so dass auch Paare von über eine solche Verbindungsschnur miteinander verbundenen Kugeln entstehen können, die dann über Blattansätze oder dergl. gehängt oder maschinell, ausgeworfen werden können.

Es ist auch grundsätzlich bekannt, eine Schädlingsbekämpfung aus der Luft durchzuführen. Dabei wird das jeweilige Mittel zur Schädlingsbekämpfung beispielsweise durch Sprühen von einem Luftfahrzeug oder Flugzeug auf Pflanzen ausgebracht, die vor Schädlingen, wie Insekten, zu schützen sind oder deren bereits vorhandener Befall zu bekämpfen ist.

Bei einer solchen Verteilung von Schädlingsbekämpfungsmitteln durch Luftfahrzeuge kann bei diesen grundsätzlich zwischen horizontal und vertikal startenden Flugzeugen unterschieden werden. Als ein vertikal startendes Flugzeug ist beispielsweise ein Helikopter zu nennen. Helikopter haben den Vorteil, dass sie langsamer und dabei zielgenauer fliegen können als horizontal startende Flugzeuge.

Die WO 90/14760 A1 offenbart eine Vorrichtung für die dosierte Ausbringung von Kapseln auf landwirtschaftliche Flächen, zur Montage auf einem Kleinflugzeug. Der vorliegenden Erfindung liegt daher die Aufgabe zugrunde, eine Vorrichtung bereitzustellen, mit der ein gezielter Abwurf von Kugeln im weitesten Sinn, einschliesslich z.B. von Granulaten, zur Schädlingsbekämpfung und gleichzeitig eine gezielte Dosierung dieser Kugeln in zudem kostensparender Weise zu Land oder aus der Luft möglich wird.

Gelöst wird diese Aufgabe, durch eine Kugelabwurfvorrichtung nach Anspruch 1. Dabei ist die Bezeichnung als Kugelabwurfvorrichtung im weitesten Sinn zu verstehen und umfasst beispielsweise auch Granulate und jegliche andere dosierbare feste Formen.

Die Dosiereinheit weist eine Grundplatte mit einem Dosierkegelhalter und einer Dosieröffnung auf. Die Grundplatte dient insbesondere zur Halterung der Komponenten der Dosier- und der Steuereinheit. Durch die Dosieröffnung werden die Kugeln für den Abwurf dosiert.

Die Antriebseinheit ist mit einem Spannungsregler, einem Servomotor und zwei ineinander greifenden Kegelrädern versehen, wobei ein dem Dosierkegel zugewandtes Kegelrad von einem dem Servomotor zugewandten Kegelrad angetrieben und das dem Dosierkegel zugewandte Kegelrad drehfest mit dem Dosierkegel verbunden und in dem Dosierkegelhalter drehbar gelagert ist. Durch die Kegelräder ist eine Richtungsänderung der horizontal ausgerichteten Abtriebsachse des Servomotors auf die vertikal ausgerichteten Drehachse des Dosierkegels möglich.

Des weiteren kann die Steuereinheit einen integrierten Schaltkreis aufweisen, der mit einem Endschalter zusammenwirkt. Mit dem integrierten Schaltkreis und dem Endschalter wird die genaue Positionierung der Kugeln über die Dosieröffnung geregelt.

Vorzugsweise ist das Flug- oder Fahrzeug und/oder die Steuereinheit ferngesteuert. Durch diese Fernsteuerung ist kein Pilot in dem Flug- oder Fahrzeug selbst erforderlich, um z.B. das Fluggerät zu bedienen. Es wird vom Boden aus durch Fernsteuerung bedient. Dadurch kann die Kugelabwurfvorrichtung sehr leicht und klein ausgebildet werden und benötigt entsprechend nur wenig Treibstoff.

Die Antriebseinheit und die Steuereinheit können durch eine an der Grundplatte befestigbare Abdeckung geschützt sein. Dadurch wird vor allem ein Schutz der elektronischen Bauteile erreicht, als solche insbesondere die Platine mit dem integrierten Schaltkreis und dem Endschalter.

Erfindungsgemäss kann es vorgesehen sein, dass der Kugelbehälter und/oder die Komponenten der Dosiereinheit aus Kunststoff ausgebildet sind. Dies dient der Reduzierung des Gewichts der Kugelabwurfvorrichtung, was sich insbesondere dann, wenn das die Kugelabwurfvorrichtung aufweisende Fahrzeug oder Flugzeug ferngesteuert ist, kostengünstig hinsichtlich des Kraftstoffverbrauchs auswirkt.

Besonders bevorzugt ist das die Kugelabwurfvorrichtung aufweisende Fahrzeug oder Flugzeug als Luftfahrzeug in Form eines Kopters mit einer Mehrzahl von in einer Ebene oder in zwei Ebenen angeordneten, senkrecht nach unten wirkenden Rotoren oder Propellern ausgebildet. Dieser ist im folgenden allgemein als Multi- oder Mikrokopter oder in vorzugsweisen Ausgestaltungen als Quadro- oder Hexakopter bezeichnet.

Die für den Antrieb erforderlichen Motoren können versetzt oder direkt übereinander angeordnet sein. Im Rahmen der vorliegenden Erfindung ist im Fall des Hexakopters eine versetzte Anordnung bevorzugt, wobei diese Anordnung als ein Koaxialantrieb bezeichnet ist. Kopter in Form von Mikro- bzw. Multikoptern weisen hervorragende Flug- und Steuerungseigenschaften auf. Sie sind einfach und zielgenau zu steuern, was für eine zielgerichtete, punktgenaue Platzierung von Schädlingsbekämpfungsmitteln vorteilhaft genutzt werden kann.

Neben den besonders bevorzugten Quadro- oder Hexakoptern sind grundsätzlich ebenso Octokopter oder auch Multikopter mit drei oder zwölf in einer Ebene oder in zwei Ebenen angeordneten, senkrecht nach unten wirkenden Rotoren oder Propellern, einsetzbar.

Kopter, wie insbesondere Quadro- oder Hexakopter, benötigen zur Steuerung im Gegensatz zu Hubschraubern keine mechanischen Komponenten, wie Verstellpropeller oder Ruder. Die Rotoren oder Propeller sind direkt fest am Motor montiert. Der Auftrieb des Multi- bzw. Mikrokopters wird durch eine Erhöhung oder Verringerung der Motordrehzahl reguliert und dadurch sein Steigen oder Sinken erreicht.

Grundsätzliches Funktionsprinzip der Multi- bzw. Mikrokopter ist es, dass ein Teil der Rotoren sich jeweils im Uhrzeigersinn dreht und ein weiterer Teil gegen den Uhrzeigersinn. Die von den Rotoren auf das Traggestell übertragenen Drehmomente heben sich dabei auf, solange die Summe der Kräfte der links- bzw. rechtsdrehenden Rotoren gleich ist und die Kräfte sich somit neutralisieren. Am Beispiel des Quadrokopters bedeutet dies, dass sich jeweils zwei Rotoren im und zwei weitere gegen den Uhrzeigersinn drehen.

Eine Drehung des Quadrokopters um die Vertikalachse wird dadurch erreicht, dass die links- und die rechtsdrehenden Rotoren mit unterschiedlicher Drehzahl angesteuert werden, wodurch die Neutralisierung des Drehmoments aufgehoben wird. Drehungen um die Längs- bzw. Querachse erfolgen durch unterschiedliche Ansteuerung der auf der jeweiligen Achse liegenden Motoren. Dabei ist die Drehzahl der links- bzw. rechtsdrehenden Motoren umgekehrt proportional zu verändern, damit die Summe der von ihnen erzeugten Drehmomente gleich bleibt.

Bisher ist es bekannt, Mikrokopter insbesondere für Foto- und Filmaufnahmen einzusetzen. Hierfür ist die Flugeigenschaft des Mikrokopters wichtig und wird entsprechend ausgenutzt, dass er ruhig an einer Stelle in der Luft stehen kann. Ausserdem werden Mikro- bzw. Multikopter gern bei Modellfliegern eingesetzt, beispielsweise für Ballspiele in der Luft. Hier wird ein weiterer grosser Vorteil solcher Mikro- bzw. Multikopter ausgenutzt, nämlich der einer reaktionsschnellen und präzisen Ansteuerung.

Die Erfindung bezieht sich auch auf die Verwendung der erfindungsgemässen Kugelabwurfvorrichtung zur Dosierung und zum Abwurf von Schädlingsbekämpfungsmitteln aus der Luft, bevorzugt von Trichogramma-Trägern in Form von Kapseln, insbesondere kugelförmigen Kapseln.

Insbesondere dann, wenn die Kugelabwurfvorrichtung in einem Multikopter, bevorzugt einem Quadro- oder Hexakopter, angeordnet ist, so dass die Ausbringung der Schädlingsbekämpfungsmittel aus der Luft erfolgt, wird vermieden, dass dabei Pflanzen beschädigt werden, wie dies der Fall ist, wenn Landfahrzeuge zur Ausbringung eingesetzt werden.
Trichogramma enthaltende Kapseln bzw. Kugeln sind dabei nur ein Beispiel dafür, biologische Schädlingsbekämpfungsmittel über die erfindungsgemässe Kugelabwurfvorrichtung an Ort und Stelle in der Natur zu verteilen.

In vorteilhafter Weise kann dabei noch vorgesehen sein, dass die Dosierung des jeweiligen Schädlingsbekämpfungsmittels, wie der Trichogramma enthaltenden Kugeln, zum Abwurf in der Natur nach einem vorherbestimmten, vorzugsweise äquidistanten Muster erfolgt.

Dieses vorherbestimmte Muster ist durch Studien bestimmt und dabei festgestellt worden, in welchen möglichst genau einzuhaltenden Abständen voneinander die Kugeln aufzubringen sind, um eine möglichst effiziente, kostensparende Verteilung der Trichogramma-Kugeln zu gewährleisten.
Ein Multikopter, vorzugsweise Quadrokopter, bietet hier eine ideale Unterstützung, da er eine quasi punktgenaue Dosierung über den Nutzflächen erlaubt, die von dem Maiszünsler befallen oder zumindest vor diesem zu schützen sind.

Im folgenden wird die Erfindung anhand von Ausführungsbeispielen in Verbindung mit der beigefügten Zeichnung näher erläutert.

Es zeigen:
- Fig. 1:: eine schematische Seitenansicht der Kugelabwurfvorrichtung,

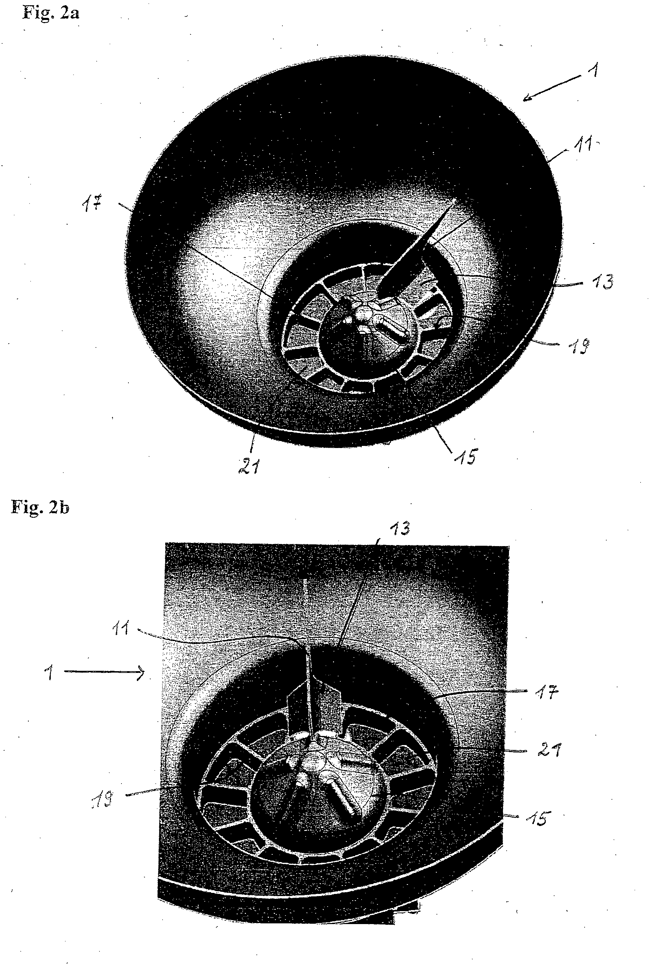

- Fig. 2a:: eine schematische Ansicht der Kugelabwurfvorrichtung von oben mit Dosierrad in dreidimensionaler Darstellung,
- Fig. 2b:: eine weitere schematische Ansicht des Dosierrades der Kugelabwurfvorrichtung von oben in dreidimensionaler Darstellung,

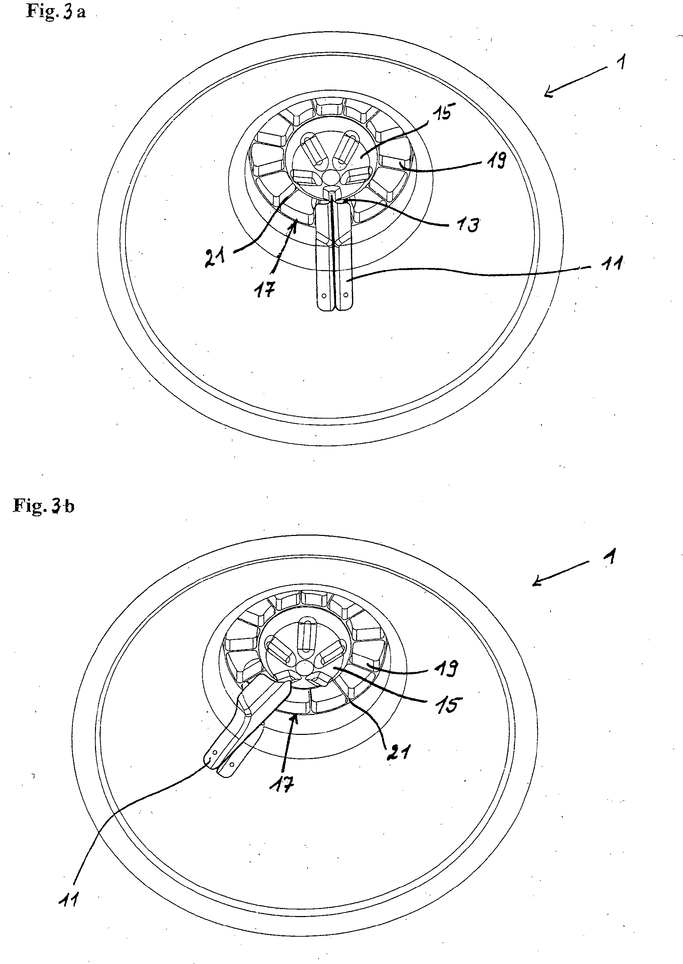

- Fig. 3a:: eine schematische Ansicht der Kugelabwurfvorrichtung in zweidimensionaler Darstellung,
- Fig. 3b:: eine weitere schematische Ansicht des Dosierrades der Kugelabwurfvorrichtung in zweidimensionaler Darstellung, ,
- Fig. 4:: eine teilweise geschnittene Ansicht durch die Kugelabwurfvorrichtung entlang der Ebene A-A von Fig. 1,
- Fig. 5a:: eine schematische Teilansicht der Kugelabwurfvorrichtung von unten und
- Fig. 5b:: eine schematische Teil- und Schnittansicht durch die Kugelabwurfvorrichtung entlang der Ebene C-C von Fig. 5a.

Der im Rahmen der vorliegenden Erfindung zur Aufnahme der Kugelabwurfvorrichtung eingesetzte Mikro- bzw. Multikopter ist in den beigefügten Fig. nicht näher dargestellt, da er als solches grundsätzlich bekannt ist. Dennoch sollen seine Grundzüge, wie sie in ihrem Einsatz im Rahmen der Erfindung zum Tragen kommen können, kurz erläutert werden. Dieser Mikro- bzw. Multikopter wurde in zwei Varianten als Aufnahmevorrichtung für die Kugelabwurfvorrichtung eingesetzt. In einer Variante ist der Mikro- bzw. Multikopter in Form eines Quadrokopters ausgebildet. Dazu weist der Quadrokopter eine sogenannte "+-Konfiguration" auf, kann aber auch in "X- bzw. H-Konfiguration" angeordnet sein. "+" bzw. "X oder H" bezeichnet dabei die Anordnung der Propeller und der diese antreibenden Motoren. Beide Konfigurationen sind für die Zwecke dieses Einsatzes gleichwertig verwendbar. Es werden alle vier Motoren gleichzeitig angesteuert. Die Motoren sind bei der "X- bzw. H-Konfiguration" um 45° zu der Flugrichtung versetzt. Zwar sind hierdurch grössere Drehbeschleunigungen möglich, dies ist aber für den gewünschten Einsatzzweck nicht unbedingt erforderlich. Grundsätzlich drehen sich jeweils zwei Rotoren im bzw. gegen den Uhrzeigersinn. Dadurch heben sich die von den Rotoren auf das Traggestell übertragenen Drehmomente auf, solange die Summe der Kräfte der links- bzw. rechtsdrehenden Rotoren gleich ist und die Kräfte sich somit neutralisieren. Die Drehung des Quadrokopters um die Vertikalachse erfolgt dadurch, dass die links- und rechtsdrehenden Rotoren mit unterschiedlicher Drehzahl angesteuert werden, wodurch die Neutralisierung des Drehmoments aufgehoben wird. Drehungen um die Längs- bzw. Querachse erfolgen durch unterschiedliche Ansteuerung der auf der jeweiligen Achse liegenden Motoren. Dabei ist die Drehzahl der links- bzw. rechtsdrehenden Motoren umgekehrt proportional zu verändern, damit die Summe der von ihnen erzeugten Drehmomente gleich bleibt.

In der zweiten Variante ist der eingesetzte Mikro- bzw. Multikopter in Form eines Hexakopters ausgebildet. Die Motoren dieses Hexakopters sind übereinander in Form eines Koaxialantriebs angeordnet. Es sind entsprechend sechs Antriebe bzw. Propeller vorhanden.

Sowohl der Quadrokopter als auch der Hexakopter wurden im Rahmen ihres hier dargestellten Einsatzzweckes mit einer GPS-unterstützten Flugsteuerung als Funkfernsteuerung ausgestattet. Sie wurden elektrisch angetrieben.
Die gemäss den erläuterten Möglichkeiten ausgebildeten Mikrokopter wurden verwendet, um eine Kugelabwurfvorrichtung, die insgesamt in den Fig. mit der Bezugsziffer 1 bezeichnet ist, in der Weise gezielt über Maisfelder zu bewegen, dass eine Ausbringung von Trichogramma-Kugeln auf Maisfeldern nach einem vorherbestimmten, vorzugsweise äquidistanten Muster möglich ist.
Dabei ergibt sich für den Fachmann ohne weiteres, dass die hier für die Zwecke des Ausführungsbeispiels zur Erläuterung der Erfindung angegebene Verwendung im Rahmen der Bekämpfung des Maiszünslers nur eine von vielen möglichen Verwendungen darstellt, bei denen insbesondere kugelförmige Objekte, zu denen im Rahmen dieser Erfindung auch Granulate gezählt werden, gezielt über einem vorherbestimmten Territorium abgeworfen werden.

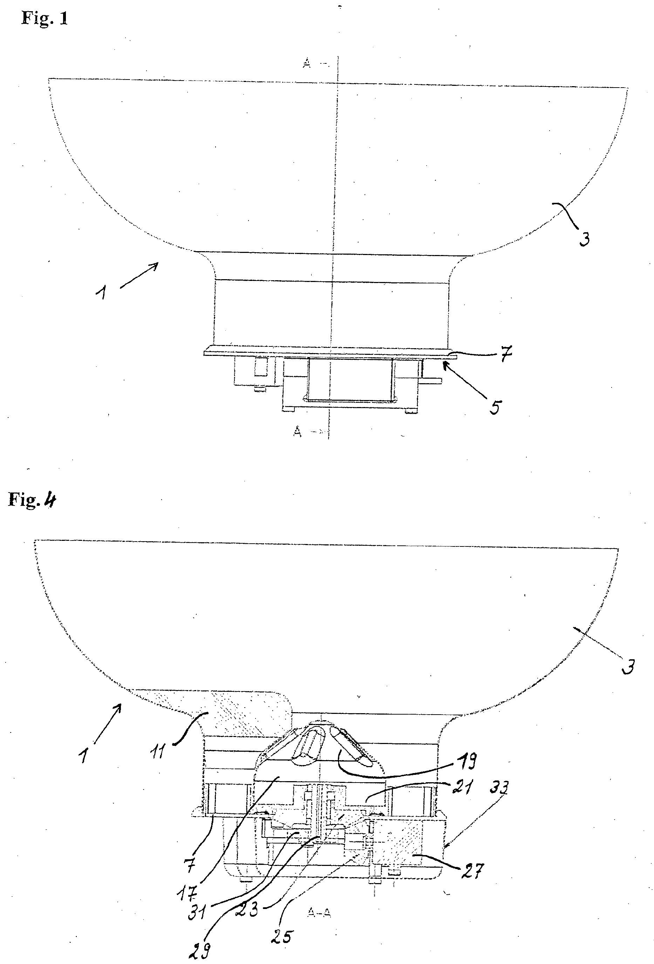

In bezug auf die Kugelabwurfvorrichtung 1 zeigt Fig. 1 zunächst einen schalen- bzw. trichterförmig ausgebildeten Kugelbehälter 3, dessen untere Trichterhalsöffnung 5 durch eine Grundplatte 7 abgedeckt ist. Der Kugelbehälter 3 wird über eine obere Kugelbehälteröffnung 9 aufgefüllt, im Ausführungsbeispiel mit den zu dosierenden Trichogramma-Kugeln, auch kurz Trichokugeln genannt. Der Kugelbehälter 3 als Vorratsbehälter für die zu dosierenden Kugeln kann auch viereckig ausgebildet sein. In der Praxis wurde beispielsweise eine Ausführungsform erprobt, bei welcher der Vorratsbehälter eine quadratische Grundform aufwies, die nach unten hin, in Richtung auf die Grundplatte 7, konisch zulief, um so den Trichter des Kugelbehälters 3 zu bilden.

In Richtung auf die untere Trichterhalsöffnung 5 ist eine Dosiersperre 11 angeordnet, die mit dem Kugelbehälter 3 fest verbunden ist. Die Dosiersperre 11 weist an ihrem unteren, zur Grundplatte 7 hin ausgerichteten Ende, zwei nach aussen abgebogene Kugelschieber 13 auf. Zwischen der Dosiersperre 11 und einem Dosierkegel 15 befindet sich ein Luftspalt, ebenso wie zwischen den Kugelschiebem 13 und einem Dosierrad 17. Der Dosierkegel 15 und das Dosierrad 17 sind drehfest miteinander verbunden. Aufgrund des Luftspalts zwischen der Dosiersperre 11 und dem Dosierkegel 15 bzw. dem Dosierrad 17 können sich diese gegenüber der Dosiersperre 11 verdrehen.

Im oberen Bereich des Dosierkegels 15 befinden sich im Ausführungsbeispiel fünf Kugelmitnehmer 19 in Form von konvexen Aufwölbungen. Diese dienen dazu, bei einer Drehbewegung des Drehkegels 15 und des Dosierrads 17, die im Kugelbehälter 3 befindlichen Kugeln in Bewegung zu halten. Das Dosierrad 17 weist mehrere Kugeltaschen 21 auf. In diesem Ausführungsbeispiel sind es zwölf Kugeltaschen 21. Ist der Kugelbehälter 3 mit Kugeln gefüllt und dreht sich das Dosierrad 17, so werden Kugeln durch den Kugelschieber 13 jeweils in eine der Kugeltaschen 21 geschoben. Die Kugeltaschen 21 sind so dimensioniert, dass sie genau eine Kugel aufnehmen können. Die Dosierung der Kugeln in die Kugeltaschen 21 ist dabei unabhängig davon, in welchem Uhrzeigersinn sich das Dosierrad 17 dreht, da die Dosiersperre 11 beidseitig jeweils einen Kugelschieber 13 aufweist.

Aus Fig. 4 sind des weiteren zwei ineinander greifende Kegelräder 23, 25 ersichtlich, wobei das dem Dosierkegel 15 zugewandte Kegelrad 23 drehfest mit dem Dosierkegel 15 verbunden ist. Das Kegelrad 25 wird von einem auf der Grundplatte 7 angebrachten Servomotor 27 angetrieben und befindet sich auf einer Antriebswelle des Servomotors 27.

Durch das Ineinandergreifen des dem Dosierkegel 15 zugewandten Kegelrads 23 mit dem auf der Antriebswelle des Servomotors 27 befindlichen Kegelrad 25 wird die Antriebskraft von der rotierenden Antriebswelle des Servomotors 27 über das mit dem Dosierkegel 15 drehfest verbundene Kegelrad 23 in eine Drehbewegung auf einer senkrecht ausgerichteten Drehachse 29 des Dosierkegels 15 übersetzt. Dabei ist die Drehachse 29 des Dosierkegels 15 in einem Dosierkegelhalter 31 gelagert, der auf der Grundplatte 7 verankert ist.

Eine ebenfalls in Fig. 4 dargestellte Abdeckung 33 dient zum Schutz des auf der Grundplatte 7 befestigten Servomotors 27 und des Kegelgetriebes.

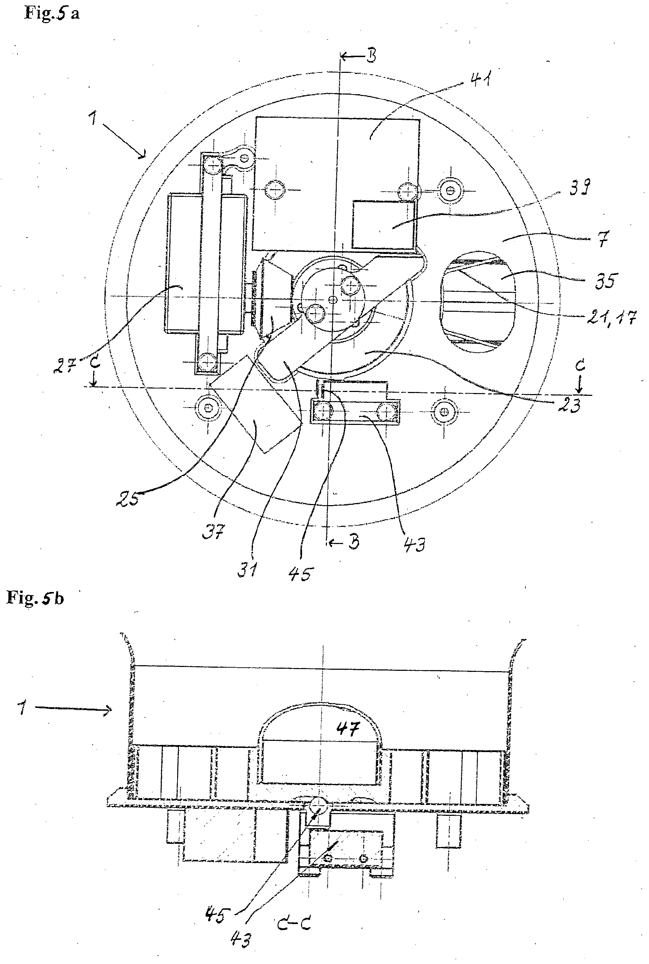

Des weiteren weist die Grundplatte 7 eine Dosieröffnung 35 auf, welche Fig. 5a zeigt. Durch diese Dosieröffnung 35 fallt jeweils eine Kugel, nachdem sie durch die Kugeltasche 21 des Dosierrads 17 über der Dosieröffnung 35 positioniert wurde. Auch der Dosierkegelhalter 31 ist aus Fig. 5a ersichtlich.

Zur der Antriebseinheit der Kugelabwurfvorrichtung 1 gehört neben dem bereits genannten Servomotor 27 und den Kegelrädern 23, 25 ein Spannungsregler 37, den ebenfalls Fig. 5a zeigt. Die Stromzufuhr für den Servomotor 27 erfolgt im Ausführungsbeispiel über einen nicht näher dargestellten Akku. Der Spannungsregler 37 regelt die für den Betrieb des Servomotors notwendige Spannung.

Um die reibungslose Funktionsfähigkeit der Kugelabwurfvorrichtung 1 zu gewährleisten, ist des weiteren eine Steuereinheit vorgesehen, welche einen integrierten Schaltkreis 39 aufweist, der sich auf einer Platine 41 befindet. Der integrierte Schaltkreis 39 wirkt mit einem Schalter 43 zusammen. Mit der Bezugsziffer 45 ist noch eine Schaltrolle bezeichnet, welche sich auf der Rückseite des Dosierrades über eine Steuerkurve 47 bewegt.

Im folgenden soll die Dosierung als solche noch näher erläutert werden.
Im Ruhezustand befindet sich eine der Kugeltaschen 21 über der Dosieröffnung 35. Sobald die Steuereinheit einen Schaltimpuls der Multi- bzw. Mikrokoptersteuerung oder alternativ der GPS-gestützten Steuerung erhält, wird einer der beiden parallelen Stromkreise geschlossen. Dadurch wird der Servomotor eingeschaltet. Durch die Bewegung des Dosierrades 17 wird der über die Steuerkurve 47 bewegte Schalter 43 ebenfalls geschlossen.
Da der Schaltimpuls der Multi- bzw. Mikrokoptersteuerung kürzer ist als die Bewegung des Dosierrades 17 hätte dies zur Folge, dass sich das Dosierrad 17 nicht weit genug dreht. Daher wird mit dem Schalter 43 der zweite, parallele Stromkreis geschlossen und erst bei einer entsprechenden Position der Steuerkurve wieder geöffnet.

Alternativ zu dieser erfinderischen Ausführung und Funktionsweise kann die Kugelabwurfvorrichtung 1 jedoch auch, abweichend von der Erfindung, ohne ein Getriebe und einen Schalter 43 direkt mit einem Motor angetrieben bzw. gesteuert werden. Dazu ist der Einsatz einer Steuereinheit erforderlich, welche die Fluggeschwindigkeit und den Abwurfabstand in eine entsprechende Drehgeschwindigkeit des Dosierrades umwandelt und diese kontinuierlich an die Fluggeschwindigkeit anpasst.

Als Variante zu dem weiter oben erläuterten erfinderischen Antrieb der Kugelabwurfvorrichtung 1 wurden ebenfalls Kugelabwurfvorrichtungen konstruiert, welche keine erfindungsgemäßen Kegelräder aufwiesen, sondern einen Zahnriemenantrieb. Dem Fachmann ist dieser Austausch im Bereich der Antriebsmittel jedoch als mögliche weitere Ausführungsform geläufig. Dies wird daher hier nur erwähnt und nicht weiter dargestellt.

Die erläuterte Kugelabwurfvorrichtung zusammen mit dem Quadrokopter oder Hexakopter zur Fortbewegung und zum Abwurf von Tricho-Kugeln aus der Luft erreichte in der Erprobung eine Geschwindigkeit von 3m/s und konnte sowohl in dem kegelförmig als auch eckig ausgebildeten Vorratsbehälter einen Vorrat von 500 Tricho-Kugeln aufnehmen.

Bei Einsatz dieser Menge wurden die Tricho-Kugeln auf einer Fläche von ca. 5ha (Hektar) verteilt, bei einer Ausbringungszeit pro ha von 5 min. Es wurden somit etwa 100 Kugeln pro ha ausgebracht, wobei der Quadrokopter gezielt jeweils im Abstand von 7m eine der Tricho-Kugeln abwarf.

Im folgenden wird nun noch die erläutert, wie der jeweils in einer der genannten Ausführungsformen eingesetzte Multi- bzw. Mikrokopter bzw. dessen Steuersystem die Kugelabwurfvorrichtung 1 ansteuert, um zu erreichen, dass die Kugelabwurfvorrichtung 1 die Kugeln bzw. zu dosierenden sonstigen Formen in einem gleichbleibendem Abstand abwirft.

Dabei wird eine externe Ansteuerung der Kugelabwurfvorrichtung 1 über ein GPS-gesteuertes System eingesetzt, so dass der jeweilige Multi- bzw. Mikrokopter das jeweilige Areal, wie im Ausführungsbeispiel ein Maisfeld, in einem automatischen Modus mittels GPS-Unterstützung abfliegt.

An jeder der Abwurfpositionen wurde ein sogenannter Wegpunkt programmiert. Das bedeutet, dass die Steuerung des Multi- bzw. Mikrokopters an jedem dieser Wegpunkte einen Schaltimpuls an die Steuereinheit, wie in Fig. 4a als Platine für den Schaltkreis 41 veranschaulicht, sendet. Dadurch wird eine Kugel bzw. die zu dosierende Form abgeworfen.

In einer Variante wird diese Ansteuerung für den Bediener dadurch vereinfacht, dass die genannten einzelnen Wegpunkte nicht einzeln programmiert, sondern von der Steuerung des Multi- bzw. Mikrokopters anhand des vorgegebenen Abstandes und der ermittelten Fluggeschwindigkeit direkt berechnet werden.

Auch wenn die erfindungsgemässe Kugelabwurfvorrichtung exemplarisch im Zusammenhang mit den Multi- bzw. Mikrokoptern beschrieben wurden und in den Ausführungsbeispielen hierfür ein Quadro- bzw. ein Hexakopter Verwendung fand, so ist doch für den Fachmann ersichtlich, dass es nicht auf die Verwendung dieser Multi- bzw. Mikrokopter ankommt, um die Erfindung ausführen zu können. Es ist vielmehr für den Fachmann ersichtlich, dass anstelle von Multi- bzw. Mikrokoptern beispielsweise auch ein Modellhubschrauber verwendet werden kann, der die Kugelabwurfvorrichtung aufnimmt.

## Patentansprüche

1. Kugelabwurfvorrichtung für ein Flug- oder Fahrzeug umfassend eine Dosiereinheit, eine Antriebseinheit, eine Steuereinheit und einen Kugelbehälter (3), wobei die Dosiereinheit als Komponenten einen Dosierkegel (15), ein Dosierrad (17) und eine Dosiersperre (11) aufweist, wobei die Dosiereinheit als weitere Komponente eine Grundplatte (7) mit einem Dosierkegelhalter (31) und einer Dosieröffnung (35) aufweist **dadurch gekennzeichnet, dass** die Antriebseinheit mit einem Spannungsregler (37), einem Servomotor (27) und zwei ineinandergreifenden Kegelrädern (23, 25) versehen ist, wobei ein dem Dosierkegel (15) zugewandtes Kegelrad (23) von einem dem Servomotor (27) zugewandten Kegelrad (25) angetrieben ist und wobei das dem Dosierkegel (15) zugewandte Kegelrad (23) drehfest mit dem Dosierkegel (15) verbunden und in dem Dosierkegelhalter (31) drehbar gelagert ist.

2. Kugelabwurfvorrichtung nach Anspruch 1, **dadurch gekennzeichnet, dass** die Steuereinheit einen integrierten Schaltkreis (39) aufweist, der mit einem Schalter (43) zusammenwirkt.

3. Kugelabwurfvorrichtung nach einem der Ansprüche 1 oder 2, **dadurch gekennzeichnet, dass** das Flug- oder Fahrzeug und/oder die Steuereinheit ferngesteuert sind.

4. Kugelabwurfvorrichtung nach einem der vorhergehenden Ansprüche, **dadurch gekennzeichnet, dass** die Antriebseinheit und die Steuereinheit durch eine an der Grundplatte (7) befestigbare Abdeckung (33) geschützt sind.

5. Kugelabwurfvorrichtung nach einem der vorhergehenden Ansprüche, **dadurch gekennzeichnet, dass** der Kugelbehälter (3) und die Komponenten der Dosiereinheit aus Kunststoff ausgebildet sind.

6. Kugelabwurfvorrichtung nach einem der vorhergehenden Ansprüche, **dadurch gekennzeichnet, dass** das Luftfahrzeug oder Flugzeug als ein Multi- oder Mikrokopter, bevorzugt als ein Quadro- oder Hexakopter, ausgebildet ist, mit einer Mehrzahl von in einer Ebene oder in zwei Ebenen angeordneten, senkrecht nach unten wirkenden Rotoren oder Propellern.

7. Verwendung einer Kugelabwurfvorrichtung nach einem der vorhergehenden Ansprüche zur Dosierung und zum Abwurf von Schädlingsbekämpfungsmitteln aus der Luft, bevorzugt von Trichogramma-Trägern in Form von Kapseln, insbesondere kugelförmigen Kapseln.

8. Verwendung einer Kugelabwurfvorrichtung nach Anspruch 7, **dadurch gekennzeichnet, dass** die Dosierung des jeweiligen Schädlingsbekämpfungsmittels zum Abwurf nach einem vorherbestimmten, vorzugsweise äquidistanten Muster erfolgt.

## Claims

1. A ball throwing device for an aircraft or vehicle comprising a dosing unit, a drive unit, a control unit and a ball container (3), the dosing unit comprising as components a metering cone (15), a metering wheel (17) and a metering barrier (11), wherein the dosing unit has a base plate (7) as a further component, with a metering cone holder (31) and a metering orifice (35), **characterized in that** the drive unit is provided with a voltage regulator (37), a servo motor (27) and two intermeshing bevel gears (23, 25), wherein a bevel gear (23) facing the metering cone (15) is driven by a bevel gear (25) facing the servo motor (27) and wherein the bevel gear (23) facing the metering cone (15) is rotatably connected to the metering cone (15) and is rotatably mounted in the metering cone holder (31).

2. The ball throwing device according to claim 1, **characterized in that** the control unit comprises an integrated circuit (39) cooperating with a switch (43).

3. The ball throwing device according to one of claims 1 or 2, **characterized in that** the aircraft or vehicle and / or the control unit are remotely controlled.

4. The ball throwing device according to one of the preceding claims, **characterized in that** the drive unit and the control unit are protected by a cover (33) which can be fastened to the base plate (7).

5. The ball throwing device according to one of the preceding claims, **characterized in that** the ball container (3) and the components of the dosing unit are made of plastic.

6. The ball throwing device according to one of the preceding claims, **characterized in that** the air vehicle or aircraft is designed as a multi- or microcopter, preferably as a quadrocopter or hexacopter, with a plurality of vertically downwardly acting rotors or propellers arranged in a plane or in two planes.

7. Use of a ball throwing device according to one of the preceding claims for metering and for the release of pesticides from the air, preferably of Trichogramma carriers in the form of capsules, in particular spherical capsules.

8. The use of the ball throwing device according to claim 7, **characterized in that** the release of the respective pesticide for dropping takes place according to a predetermined, preferably equidistant, pattern.

## Revendications

1. Un dispositif d'éjection de billes pour aéronef ou véhicule comprenant une unité de dosage, une unité d'entraînement, une unité de commande et un conteneur à billes (3), l'unité de dosage comprenant comme composants un cône de dosage (15), une roue de dosage (17) et une doseuse (11) en ce que l'unité de dosage en tant que composant supplémentaire présente une plaque de base (7) avec un support de cône de dosage (31) et un orifice de dosage (35), **caractérisé en ce que** l'unité d'entraînement comprend un régulateur de tension (37), un servomoteur (27) et deux engrenages coniques engrenés (23, 25), **en ce que** l' engrenage conique (23) faisant face au cône de dosage (15) est entraîné par l' engrenage conique (25) faisant face au servomoteur (27) et **en ce que** l'engrenage conique (23) faisant face au cône de dosage (15) est relié de manière rotative au cône de dosage (15) et est monté rotatif dans le support de cône de dosage (31).

2. Dispositif d'éjection de billes selon la revendication 1, **caractérisé en ce que** l'unité de commande comprend un circuit intégré (39) coopérant avec un commutateur (43).

3. Dispositif d'éjection de billes selon l'une des revendications 1 ou 2, **caractérisé en ce que** l'aéronef ou le véhicule et / ou l'unité de commande sont télécommandés.

4. Dispositif d'éjection de billes selon l'une des revendications précédentes, **caractérisé en ce que** l'unité d'entraînement et l'unité de commande sont protégées par un couvercle (33) pouvant être fixé à la plaque de base (7).

5. Dispositif d'éjection de billes selon l'une des revendications précédentes, caractérisé en ce le conteneur à billes (3) et les pièces de l'unité de dosage sont en plastique.

6. Dispositif d'éjection de billes selon l'une des revendications précédentes, caractérisé en ce l'aéronef ou l'aérodyne est conçu comme un multicoptère ou microcoptère, de préférence comme un quadricoptère ou un hexacoptère, avec une pluralité de rotors ou d'hélices agissant verticalement vers le bas disposés dans un plan ou dans deux plans.

7. Utilisation d'un dispositif d'éjection de billes selon l'une des revendications précédentes pour le dosage et la libération de pesticides dans l'air, de préférence à partir de supports de Trichogramma sous la forme de capsules, en particulier de capsules sphériques.

8. Utilisation d'un dispositif d'éjection de billes selon la revendication 7, **caractérisée en ce que** le dosage du pesticide respectif pour la décharge s'effectue selon un motif prédéterminé, de préférence équidistant.
